# FASCICULE DE BREVET EUROPEEN

(11) **EP 3 110 618 B1**
(45) Date de publication et mention de la délivrance du brevet: **06.12.2017**
(21) Numéro de dépôt: 15706772.9
(22) Date de dépôt: 23.02.2015
(51) Int. Cl.: B29D 30/30, B29D 30/70, B60C 9/26

(54) **PNEUMATIQUE POUR AVION COMPRENANT UNE ARMATURE DE SOMMET**
FLUGZEUGREIFEN MIT EINEM GÜRTEL
AIRCRAFT TIRE COMPRISING A BELT

(30) Priorité: 24.02.2014 FR 1451429
(43) Date de publication de la demande: 04.01.2017
(73) Titulaire: Compagnie Générale des Etablissements Michelin, 63000 Clermont-Ferrand (FR)
(72) Inventeur: ROMERO DE LA OSA, Marc, F-63040 Clermont Ferrand Cedex 9 (FR)
(74) Mandataire: Millanvois, Patrick Jacques Jean
(86) Numéro de dépôt international: PCT/EP2015/053690
(87) Numéro de publication internationale: WO 2015/124758

(56) Documents cités:
- EP-A1- 2 199 105
- FR-A- 1 268 334
- JP-A- H11 180 110
- JP-A- 2000 198 317
- JP-A- 2000 280 710

## Description

La présente invention concerne un pneumatique pour avion et, en particulier, une armature de sommet de pneumatique pour avion.

Dans ce qui suit, les directions circonférentielle, axiale et radiale désignent respectivement une direction tangente à la surface de roulement du pneumatique selon le sens de rotation du pneumatique, une direction parallèle à l'axe de rotation du pneumatique et une direction perpendiculaire à l'axe de rotation du pneumatique. Par «radialement intérieur, respectivement radialement extérieur», on entend «plus proche, respectivement plus éloigné de l'axe de rotation du pneumatique». Par «axialement intérieur, respectivement axialement extérieur», on entend «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique.

De façon générale, un pneumatique comprend une bande de roulement, destinée à venir en contact avec un sol par l'intermédiaire d'une surface de roulement, la bande de roulement étant reliée par deux flancs à deux bourrelets, les deux bourrelets étant destinés à assurer une liaison mécanique du pneumatique avec une jante sur laquelle le pneumatique est monté.

Un pneumatique radial pour avion comprend plus particulièrement une armature de carcasse radiale et une armature de sommet, telles que décrites, par exemple, dans le document EP 1381525.

L'armature de carcasse radiale est la structure de renforcement du pneumatique reliant les deux bourrelets du pneumatique. L'armature de carcasse radiale d'un pneumatique pour avion comprend généralement au moins une couche de carcasse, chaque couche de carcasse étant constituée de renforts le plus souvent textiles, enrobés dans un matériau polymérique de type élastomère ou mélange élastomérique, parallèles entre eux et formant, avec la direction circonférentielle, un angle compris entre 80° et 100°.

L'armature de sommet est la structure de renforcement du pneumatique radialement intérieure à la bande de roulement et au moins en partie radialement extérieure à l'armature de carcasse radiale. L'armature de sommet d'un pneumatique pour avion comprend généralement au moins une couche de sommet, chaque couche de sommet étant constituée de renforts parallèles entre eux et enrobés dans un matériau polymérique de type élastomère ou mélange élastomérique. Parmi les couches de sommet, on distingue usuellement les couches de travail, composant l'armature de travail et constituées le plus souvent de renforts textiles, et les couches de protection, composant l'armature de protection, constituées de renforts métalliques ou textiles, et disposées radialement à l'extérieur de l'armature de travail. L'armature de travail conditionne le comportement mécanique global de l'armature de sommet, alors que l'armature de protection protège essentiellement les couches de travail des agressions susceptibles de se propager à travers la bande de roulement radialement vers l'intérieur du pneumatique.

Les renforts textiles des couches de carcasse et des couches de sommet sont le plus souvent des câbles constitués de filés de filaments textiles, préférentiellement en polyamide aliphatique ou en polyamide aromatique. Les propriétés mécaniques en extension, telles que le module d'élasticité, l'allongement à rupture et la force à rupture des renforts textiles, sont mesurées après un conditionnement préalable. Par "conditionnement préalable", on entend le stockage des renforts textiles pendant au moins 24 heures, avant mesure, dans une atmosphère standard selon la norme européenne DIN EN 20139 (température de 20 ± 2°C, hygrométrie de 65 ± 2%). Les mesures sont réalisées de manière connue à l'aide d'une machine de traction ZWICK GmbH & Co (Allemagne) de type 1435 ou de type 1445. Les renforts textiles subissent une traction sur une longueur initiale de 400 mm à une vitesse nominale de 200 mm/min. Tous les résultats sont une moyenne de 10 mesures.

Lors de la fabrication d'un pneumatique pour avion, et plus précisément lors de l'étape de pose de l'armature de travail, une couche de travail est le plus souvent obtenue par un enroulement circonférentiel en zigzag ou par un enroulement circonférentiel en spires d'une bandelette, sur une surface cylindrique de pose ayant pour axe de révolution l'axe de rotation du pneumatique. La bandelette est généralement constituée d'au moins un renfort textile continu enrobé dans un mélange élastomérique et, le plus souvent, d'une juxtaposition de renforts textiles parallèles entre eux. Qu'elle soit réalisée par un enroulement circonférentiel en zigzag ou un enroulement circonférentiel en spires, la couche de travail est alors constituée par la juxtaposition de portions de bandelette.

Par enroulement circonférentiel en spires d'une bandelette, on entend un enroulement de la bandelette, selon la direction circonférentielle, et selon une hélice ayant un rayon égal au rayon de la surface cylindrique de pose et un angle moyen, par rapport à la direction circonférentielle, compris entre 0° et 5°. La couche de travail ainsi obtenue par un enroulement en spires est dite circonférentielle, car l'angle des renforts textiles deux à deux parallèles de la bandelette, formé dans le plan équatorial avec la direction circonférentielle, est compris entre 0° et 5°.

Par enroulement circonférentiel en zigzag d'une bandelette, on entend un enroulement de la bandelette, selon la direction circonférentielle, et selon une courbe périodique, c'est-à-dire une courbe formée d'ondulations périodiques oscillant entre des extrema. Enrouler une bandelette selon une courbe périodique signifie que la ligne moyenne de la bandelette, équidistante des bords de la bandelette, coïncide avec la courbe périodique. Lors d'un enroulement circonférentiel en zigzag d'une bandelette, les couches de travail sont posées par paire, chaque paire de couches de travail constituant un binappe de travail. Ainsi un binappe de travail est constitué, en zone courante, c'est-à-dire en dehors de ses extrémités axiales, par deux couches de travail radialement superposées. Au niveau de ses extrémités axiales, un binappe de travail comprend généralement plus de deux couches de travail radialement superposées. On appelle surépaisseur d'extrémité axiale le nombre de couches de travail supplémentaires, selon la direction radiale, par rapport aux deux couches de travail de la zone courante du binappe de travail. Cette surépaisseur d'extrémité axiale est générée par les croisements de la bandelette, en extrémité de binappe de travail, à chaque tour d'enroulement en zigzag. Une telle armature de travail comprenant des binappes de travail obtenus par un enroulement circonférentiel en zigzag d'une bandelette a été décrite dans les documents EP 0540303, EP 0850787, EP 1163120 et EP 1518666.

La courbe périodique d'un enroulement circonférentiel en zigzag est caractérisée par son amplitude et sa période. L'amplitude de la courbe périodique, c'est-à-dire la distance entre ses extrema, mesurée selon la direction axiale, définit la largeur axiale du binappe de travail, c'est-à-dire la distance entre les extrémités axiales du binappe de travail. Plus précisément la largeur axiale du binappe de travail est égale à l'amplitude de la courbe périodique, majorée par la largeur de la bandelette. La période de la courbe périodique, mesurée dans le plan équatorial du pneumatique, est telle que la circonférence de la surface cylindrique de pose est le plus souvent un multiple entier de cette période ou de la demi-période correspondante. Les documents EP 2199108 et US 5730814 décrivent des relations entre la période de la courbe périodique et la circonférence de la surface cylindrique de pose de la bandelette. En outre le document FR 1268334 décrit un pneumatique selon le préambule de la revendication 1 avec un enroulement circonférentiel en zigzag d'une bandelette comprenant N périodes P d'une courbe périodique sur un nombre T de circonférences 2ΠR d'une surface cylindrique de pose, le nombre N de périodes P de la courbe périodique étant un nombre entier qui vérifie trois conditions.

Dans le cas d'un pneumatique pour avion, l'angle formé par la tangente à la courbe périodique, dans le plan équatorial, c'est-à-dire au point où la courbe périodique coupe le plan équatorial, ne peut prendre qu'un nombre limité de valeurs, pour une amplitude donnée de la courbe périodique, c'est-à-dire pour une largeur axiale donnée du binappe de travail. A titre d'exemples et de façon non exhaustive, pour un pneumatique pour avion de dimension 1400X530 R 23 ayant un binappe de travail de largeur axiale d'environ 350 mm et posé sur une surface cylindrique de pose de rayon égal à 650 mm, une période égale à la circonférence de la surface cylindrique de pose permet d'obtenir un angle de l'ordre de 10°, une période égale à la demi-circonférence de la surface cylindrique de pose permet d'obtenir un angle de l'ordre de 20° et une période égale au tiers de la circonférence de la surface cylindrique de pose permet d'obtenir un angle de l'ordre de 30°. Cet angle, qui est également l'angle formé par les renforts textiles de la bandelette avec la direction circonférentielle, dans le plan équatorial du pneumatique, est un paramètre de conception important qui conditionne les diverses rigidités mécaniques du binappe de travail et donc celles de l'armature de travail, ce qui impacte en particulier la rigidité de dérive du pneumatique. Par définition, la rigidité de dérive du pneumatique est égale au couple à appliquer selon la direction radiale du pneumatique, pour entraîner en rotation le pneumatique, selon un angle de rotation de 1° autour de la direction radiale. Par conséquent, un nombre restreint de valeurs d'angles, atteignables par les nombres de période couramment utilisés, limite les possibilités d'optimisation des rigidités mécaniques de l'armature de travail.

Les inventeurs se sont donnés pour objectif d'augmenter le nombre de valeurs possible de l'angle formé, avec la direction circonférentielle du pneumatique, par les renforts textiles de la bandelette enroulée en zigzag, constitutive d'un binappe de travail de l'armature de travail d'un pneumatique pour avion, afin de pouvoir optimiser les rigidités mécaniques de l'armature de travail.

Cet objectif a été atteint, selon l'invention, par un pneumatique pour avion, comprenant :
- une armature de travail radialement intérieure à une bande de roulement et radialement extérieure à une armature de carcasse,
- l'armature de travail comprenant au moins un binappe de travail constitué de deux couches de travail radialement superposées,
- le binappe de travail étant constitué par l'enroulement circonférentiel en zigzag d'une bandelette de largeur W, sur une surface cylindrique de pose de rayon R, ayant pour axe de révolution l'axe de rotation du pneumatique, selon une courbe périodique,
- la courbe périodique ayant une période P et formant un angle A, avec la direction circonférentielle du pneumatique, dans le plan équatorial du pneumatique,
- l'enroulement circonférentiel en zigzag de la bandelette comprenant N périodes P de la courbe périodique sur un nombre T de circonférences 2ΠR de la surface cylindrique de pose,
- le nombre N de périodes P de la courbe périodique étant un nombre entier qui vérifie les conditions suivantes:
   (a) N*(W/sinA)= 2ΠR,
   (b) N*P=2ΠR *T, où T est un nombre entier,
   (c) N*T est le plus petit commun multiple à N et T,
- le rapport T/N entre le nombre entier T de circonférences 2ΠR de la surface cylindrique de pose et le nombre entier N de périodes P de la courbe périodique, nécessaires à la constitution du binappe de travail, étant au moins égal à 1.8 et au plus égal à 2.2.

Chacune des deux couches de travail, composant le binappe de travail, est constituée par la juxtaposition de N portions de bandelette, la bandelette ayant une largeur W et formant un angle A avec la direction circonférentielle du pneumatique, où N est le nombre de périodes P de la courbe périodique, c'est-à-dire le nombre de fois que l'on doit répéter la trajectoire de pose de la bandelette pour réaliser le binappe de travail. Par conséquent, la longueur circonférentielle développée d'une couche de travail est égale à N*(W/sinA), où W/sinA est la largeur de la bandelette projetée sur la direction circonférentielle. La première condition N*(W/sinA)=2ΠR traduit le fait que la longueur circonférentielle développée d'une couche de travail est strictement égale à la circonférence 2ΠR de la surface cylindrique de pose de rayon R, c'est-à-dire que la juxtaposition de portions de bandelette est réalisée de manière uniforme. Par juxtaposition uniforme de portions de bandelette, on entend une juxtaposition sans discontinuité ou trou entre deux portions de bandelette adjacentes, ou sans recouvrement de deux portions de bandelette adjacentes.

La longueur totale de bandelette, projetée sur la direction circonférentielle, nécessaire à la réalisation du binappe de travail, est égale à N*P, où N est le nombre entier de périodes P de la courbe périodique et où P est la période de la courbe périodique. La deuxième condition N*P=2ΠR*T, où T est un nombre entier, exprime le fait que la longueur totale projetée de bandelette est égale à un multiple entier T de la circonférence 2ΠR de la surface cylindrique de pose de rayon R. T représente le nombre de tours d'enroulement de la bandelette sur la surface cylindrique de pose de rayon R, nécessaire à la réalisation du binappe de travail. Le fait que T soit un nombre entier permet de garantir une résistance mécanique du binappe de travail uniforme selon la direction circonférentielle. En effet, si T n'est pas un nombre entier, le binappe de travail comprend alors, en zone courante axialement intérieure à ses extrémités axiales, des zones constituées de deux couches de travail radialement superposées et des zones constituées de plus de deux couches de travail radialement superposées, donc des zones avec des résistances mécaniques différenciées, d'où une résistance mécanique non uniforme du binappe de travail.

La troisième condition « N*T est le plus petit commun multiple à N et T » traduit le fait que, pour réaliser un binappe de travail d'épaisseur uniforme, il est nécessaire d'avoir une relation arithmétique particulière entre le nombre entier N de périodes P de la courbe périodique et le nombre entier T de tours d'enroulement de la bandelette sur la surface cylindrique de pose. Si cette condition n'est pas respectée, le binappe de travail comprend alors des zones comprenant des trous, dus à l'absence de bandelette, et des zones comprenant des surépaisseurs, générées par des croisements et donc des superpositions de portions de bandelette.

La combinaison des trois conditions permet de réaliser un binappe de travail, par enroulement en zigzag d'une bandelette formant, avec la direction circonférentielle, un angle A donné, c'est à-dire de maîtriser les rigidités mécaniques du binappe de travail, dans un but d'optimisation des performances du pneumatique, telles que l'endurance ou l'usure.

Selon l'invention, le rapport T/N entre le nombre entier T de circonférences 2ΠR de la surface cylindrique de pose et le nombre entier N de périodes P de la courbe périodique, nécessaires à la constitution du binappe de travail, est au moins égal à 1.8 et au plus égal à 2.2. Avec un enroulement circonférentiel en spires usuel, l'angle A, formée avec la direction circonférentielle par la bandelette, est proche de 0°. Avec un enroulement circonférentiel en zigzag usuel, dans lequel la période P de la courbe périodique est égale à la circonférence 2ΠR de la surface cylindrique de pose, c'est-à-dire dans lequel le ratio T/N est égale à 1, l'angle A est proche de 10°. Un enroulement circonférentiel en zigzag, avec un ratio T/N proche de 2, permet d'obtenir un angle A égal à environ 5°, qui entraîne une faible rigidité de dérive du pneumatique souvent visée pour un pneumatique d'avion.

Il est également avantageux que la largeur W de la bandelette soit au moins égale à 2 mm, de préférence au moins égale à 6 mm. Une valeur minimale de largeur de bandelette est nécessaire à la fois pour la faisabilité technologique de la bandelette et pour une productivité minimale de l'étape de pose de la bandelette.

Il est encore avantageux que la largeur W de la bandelette soit au plus égale à 20 mm, de préférence au plus égale à 14 mm. Une valeur maximale de largeur de bandelette permet de réduire le nombre de tours d'enroulement de la bandelette sur la surface cylindrique de pose, nécessaire à la réalisation du binappe de travail, d'où une réduction du temps nécessaire à la réalisation du binappe de travail et donc un gain de productivité.

La bandelette comprend généralement des renforts constitués d'un matériau textile, de préférence d'un polyamide aliphatique. En effet, les renforts textiles, en particulier en polyamide aliphatique tel que le nylon, ont une masse relativement faible par rapport à des renforts métalliques, ce qui permet un gain significatif sur la masse du pneumatique et donc sur la charge utile de l'avion.

Alternativement, la bandelette comprend des renforts constitués d'un polyamide aromatique. Les renforts en polyamide aromatique, tel que l'aramide, permettent en effet d'obtenir un bon compromis entre la résistance mécanique et la masse.

Selon un autre mode de réalisation, la bandelette comprend des renforts constitués d'une combinaison d'un polyamide aliphatique et d'un polyamide aromatique. De tels renforts sont usuellement appelés renforts hybrides et présentent à la fois les avantages techniques du nylon et ceux de l'aramide : résistance mécanique, déformabilité en traction et masse faible.

L'invention concerne également un procédé de fabrication d'un pneumatique pour avion, comprenant une étape de fabrication d'une armature de travail dans laquelle le binappe de travail est obtenu par l'enroulement circonférentiel en zigzag d'une bandelette de largeur W, sur une surface cylindrique de pose de rayon R, ayant pour axe de révolution l'axe de rotation du pneumatique, selon une courbe périodique, la courbe périodique ayant une période P et formant un angle A, avec la direction circonférentielle du pneumatique, dans le plan équatorial du pneumatique, l'enroulement circonférentiel en zigzag de la bandelette comprenant N périodes P de la courbe périodique sur un nombre T de circonférences 2ΠR de la surface cylindrique de pose, le nombre N de périodes P de la courbe périodique étant un nombre entier qui vérifie les conditions suivantes:
(a) N*(W/sinA)=2ΠR,
(b) N*P=2ΠR*T, où T est un nombre entier,
(c) N*T est le plus petit commun multiple à N et T,
et le rapport T/N entre le nombre entier T de circonférences 2ΠR de la surface cylindrique de pose et le nombre entier N de périodes P de la courbe périodique, nécessaires à la constitution du binappe de travail, étant au moins égal à 1.8 et au plus égal à 2.2.

Les caractéristiques et autres avantages de l'invention seront mieux compris à l'aide des figures suivantes, non représentées à l'échelle :
- Figure 1 : demi-vue en coupe d'un pneumatique pour avion selon l'invention, dans un plan radial (YZ) passant par l'axe de rotation (YY') du pneumatique.
- Figure 2 : vue en perspective d'une bandelette, constitutive d'un binappe de travail d'un pneumatique selon l'invention, enroulée circonférentiellement en zigzag, selon une courbe périodique, sur une surface cylindrique de pose.
- Figure 3 : vue développée d'une bandelette, constitutive d'un binappe de travail d'un pneumatique selon l'invention, enroulée circonférentiellement en zigzag, selon une courbe périodique, après la pose d'une période.
- Figures 4A à 4D : vues développées d'une bandelette, constitutive d'un binappe de travail d'un pneumatique selon l'invention, enroulée circonférentiellement en zigzag, selon une courbe périodique, à différentes étapes de la pose : après la pose de N=1 période (figure 4A), de N=4 périodes (figure 4B), de N=8 périodes (figure 4C) et de N=16 périodes (figure 4D).

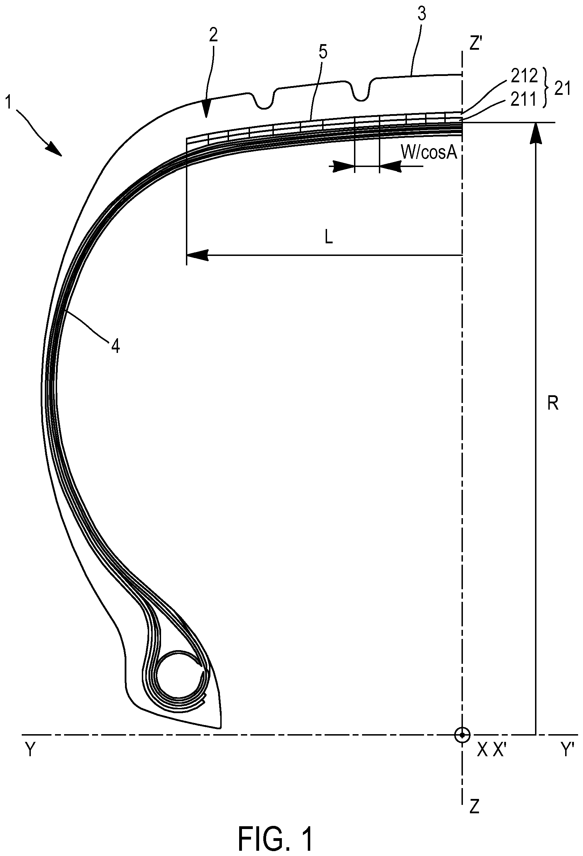

La figure 1 représente une demi-vue en coupe, dans un plan radial (YZ) passant par l'axe de rotation (YY') du pneumatique, d'un pneumatique 1 pour avion comprenant une armature de travail 2 radialement intérieure à une bande de roulement 3 et radialement extérieure à une armature de carcasse 4. L'armature de travail 2 comprend un binappe de travail 21, constitué au moins en partie de deux couches de travail (211, 212) radialement superposées, et obtenu par l'enroulement circonférentiel en zigzag d'une bandelette de largeur W, sur une surface cylindrique de pose de rayon R, ayant pour axe de révolution l'axe de rotation (YY') du pneumatique. Dans un plan radial (YZ), chaque couche de travail (211, 212) est constituée par une juxtaposition axiale de portions de bandelette 5 de largeur W/cosA, où W est la largeur (non représentée) de la bandelette 5, mesurée perpendiculairement à la ligne moyenne de la bandelette 5, et A est l'angle (non représenté) formé par la ligne moyenne de la bandelette 5, avec la direction circonférentielle (XX'), dans le plan équatorial (XZ).

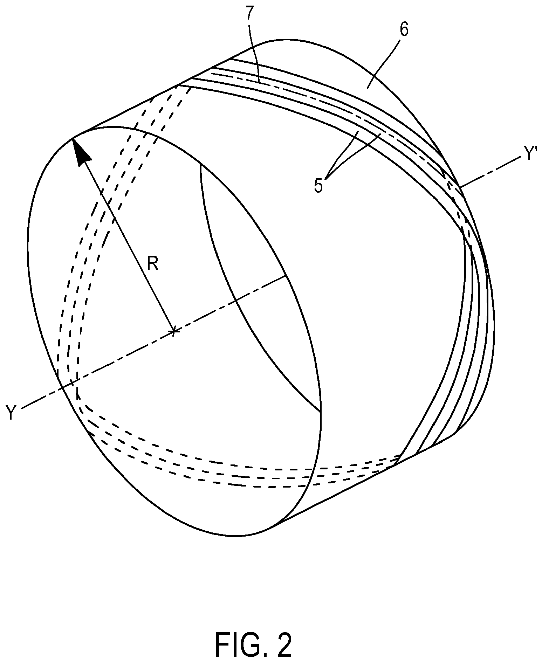

La figure 2 est une vue en perspective d'une bandelette 5, constitutive d'un binappe de travail d'un pneumatique selon l'invention, enroulée circonférentiellement en zigzag, selon une courbe périodique 7, sur une surface cylindrique de pose 6, de révolution autour de l'axe de rotation (YY') du pneumatique, ayant un rayon R.

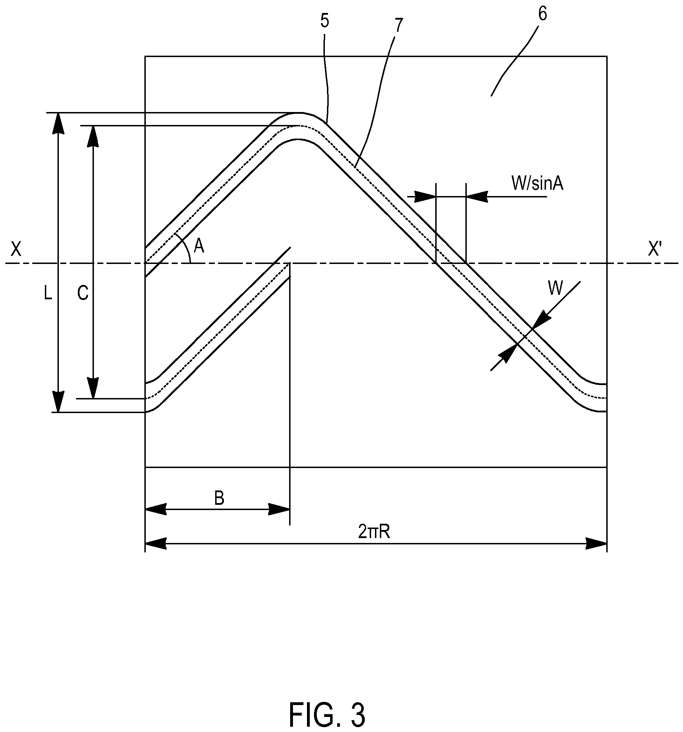

La figure 3 est une vue développée d'une bandelette 5, constitutive d'un binappe de travail d'un pneumatique selon l'invention, enroulée circonférentiellement en zigzag, selon une courbe périodique 7, après la pose d'une période. La bandelette 5 est posée sur une surface cylindrique 6 de circonférence 2ΠR, représentée sous forme développée. La ligne moyenne de la bandelette 5 suit une courbe périodique 7, formant un angle A avec la direction circonférentielle (XX'). La courbe périodique 7 a une période P, égale à 2ΠR+B, où B est la portion de période P au-delà de la circonférence 2ΠR, et une amplitude C, qui, majorée par deux demi-largeurs W/2 de la bandelette 5, c'est-à-dire par la largeur W de la bandelette 5, définit la largeur L=C+W du binappe de travail. La largeur de la bandelette 5, projetée sur la direction circonférentielle (XX'), est par conséquent égale à W/sinA.

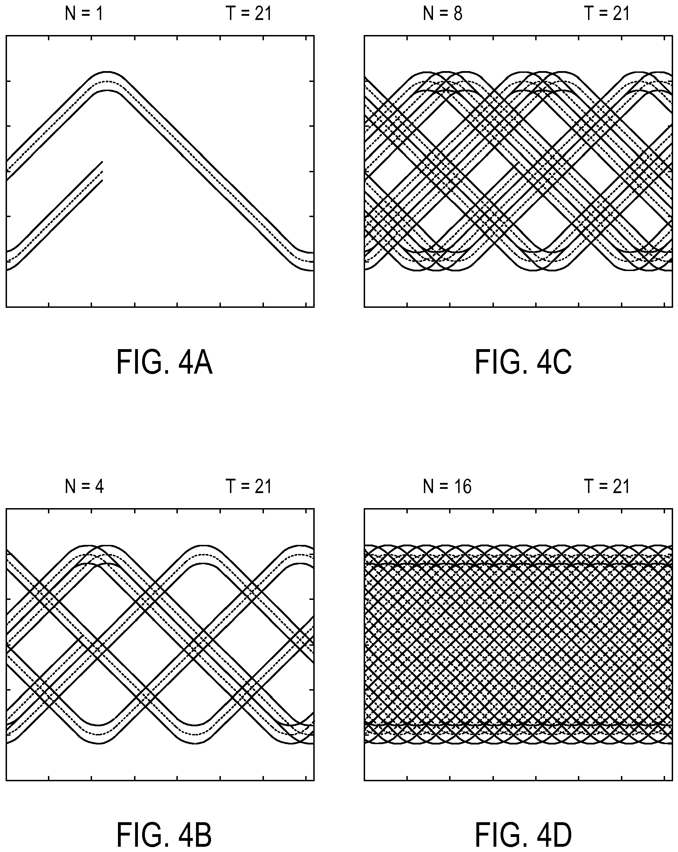

Les figures 4A à 4D représentent des vues développées d'une bandelette, constitutive d'un binappe de travail d'un pneumatique selon l'invention, enroulée circonférentiellement en zigzag, selon une courbe périodique, à différentes étapes de la pose, respectivement après la pose de N=1 période (figure 4A), de N=4 périodes (figure 4B), de N=8 périodes (figure 4C) et de N=16 périodes (figure 4D). L'exemple représenté correspond à la réalisation d'un binappe de travail par un enroulement circonférentiel en zigzag d'une bandelette, l'enroulement comprenant N=16 périodes P de la courbe périodique sur un nombre T=21 circonférences 2ΠR de la surface cylindrique de pose de rayon R. La figure 4D représente la vue développée du binappe de travail complètement réalisé, présentant un aspect uniforme sans trou.

Les inventeurs ont réalisé l'invention pour un pneumatique pour avion de dimension 1400X530 R 23 dont l'armature de travail comprend 3 binappes superposés, respectivement radialement intérieur, intermédiaire et radialement extérieur, dont les caractéristiques de géométrie et de pose sont présentées dans le tableau 1 ci-dessous:

**Tableau 1**

| Binappe de travail | Binappe radialement intérieur | Binappe intermédiaire | Binappe radialement extérieur |
|---|---|---|---|
| Largeur axiale L (mm) | 370 mm | 347.3 mm | 321.5 mm |
| Largeur bandelette W (mm) | 11.4 mm | 11.4 mm | 11.4 mm |
| Angle A (°) | 5.1° | 4.8° | 4.5° |
| Période P (mm) | 8283 mm | 8330 mm | 8378 mm |
| Rayon de pose R (mm) | 649 mm | 652 mm | 655 mm |
| Circonférence de pose 2ΠR (mm) | 4076 mm | 4095 mm | 4113 mm |
| Nombre de périodes N | 32 | 30 | 28 |
| Nombre de tours d'enroulement T | 65 | 61 | 57 |
| Rapport T/N | 2.03 | 2.03 | 2.03 |

Dans le pneumatique étudié, les inventeurs, visant à obtenir trois binappes de travail, radialement superposés de l'intérieur vers l'extérieur, ayant des largeurs axiales respectives sensiblement égales à 370 mm, 350 mm et 320 mm, et comprenant des renforts textiles hybrides formant un angle d'environ 5° avec la direction circonférentielle, ont réalisé lesdits binappes de travail par un enroulement circonférentiel en zigzag d'une bandelette de largeur 11.4 mm, dans lequel le rapport entre le nombre T de circonférences 2ΠR de la surface cylindrique de pose, ou nombre de tours d'enroulement, et le nombre entier N de périodes P de la courbe périodique, nécessaires à la constitution de chaque binappe de travail, est égal à 2.03, donc compris entre 1.8 et 2.2. Les binappes de travail ainsi obtenus satisfont le critère d'épaisseur uniforme et donc de résistance mécanique uniforme.

Cette invention n'est pas limitée au domaine technique du pneumatique pour avion, mais est également applicable à tout pneumatique comprenant une armature de sommet avec au moins un binappe obtenu par un enroulement en zigzag d'une bandelette, tel que, par exemple et de façon non exhaustive, un pneumatique pour métro. Elle est également applicable à une armature de protection lorsque celle-ci comprend un binappe obtenu par un enroulement en zigzag d'une bandelette.

## Revendications

1. Pneumatique (1) pour avion comprenant:
- une armature de travail (2) radialement intérieure à une bande de roulement (3) et radialement extérieure à une armature de carcasse (4),
- l'armature de travail (2) comprenant au moins un binappe de travail (21) constitué de deux couches de travail (211, 212) radialement superposées,
- le binappe de travail (21) étant constitué par l'enroulement circonférentiel en zigzag d'une bandelette (5) de largeur W, sur une surface cylindrique de pose (6) de rayon R, ayant pour axe de révolution l'axe de rotation (YY') du pneumatique, selon une courbe périodique (7),
- la courbe périodique (7) ayant une période P et formant un angle A, avec la direction circonférentielle (XX') du pneumatique, dans le plan équatorial (XZ) du pneumatique,
- l'enroulement circonférentiel en zigzag de la bandelette (5) comprenant N périodes P de la courbe périodique (7) sur un nombre T de circonférences 2ΠR de la surface cylindrique de pose (6),
- le nombre N de périodes P de la courbe périodique (7) étant un nombre entier qui vérifie les conditions suivantes:
(a) N*(W/sinA)=2ΠR,
(b) N*P=2ΠR*T, où T est un nombre entier,
(c) N*T est le plus petit commun multiple à N et T,
**caractérisé en ce que** le rapport T/N entre le nombre entier T de circonférences 2ΠR de la surface cylindrique de pose (6) et le nombre entier N de périodes P de la courbe périodique (7), nécessaires à la constitution du binappe de travail (21), est au moins égal à 1.8 et au plus égal à 2.2.

2. Pneumatique (1) pour avion selon la revendication 1, **dans lequel** la largeur W de la bandelette (5) est au moins égale à 2 mm, de préférence au moins égale à 6 mm.

3. Pneumatique (1) pour avion selon l'une quelconque des revendications 1 ou 2, **dans lequel** la largeur W de la bandelette (5) est au plus égale à 20 mm, de préférence au plus égale à 14 mm.

4. Pneumatique (1) pour avion selon l'une quelconque des revendications 1 à 3, la bandelette (5) étant constituée de renforts enrobés dans un mélange élastomérique, **dans lequel** la bandelette (5) comprend des renforts constitués d'un matériau textile, de préférence d'un polyamide aliphatique.

5. Pneumatique (1) pour avion selon l'une quelconque des revendications 1 à 3, la bandelette (5) étant constituée de renforts enrobés dans un mélange élastomérique, **dans lequel** la bandelette (5) comprend des renforts constitués d'un polyamide aromatique.

6. Pneumatique (1) pour avion selon l'une quelconque des revendications 1 à 3, la bandelette (5) étant constituée de renforts enrobés dans un mélange élastomérique, **dans lequel** la bandelette (5) comprend des renforts constitués d'une combinaison d'un polyamide aliphatique et d'un polyamide aromatique.

7. Procédé de fabrication d'un pneumatique (1) pour avion selon l'une quelconque des revendications 1 à 6, comprenant une étape de fabrication du binappe de travail (21), **dans laquelle** le binappe de travail (21) est obtenu par l'enroulement circonférentiel en zigzag d'une bandelette (5) de largeur W, sur une surface cylindrique de pose (6) de rayon R, ayant pour axe de révolution l'axe de rotation (YY') du pneumatique, selon une courbe périodique (7), la courbe périodique (7) ayant une période P et formant un angle A, avec la direction circonférentielle (XX') du pneumatique, dans le plan équatorial (XZ) du pneumatique, l'enroulement circonférentiel en zigzag de la bandelette (5) comprenant N périodes P de la courbe périodique (7) sur un nombre T de circonférences 2ΠR de la surface cylindrique de pose (6), le nombre N de périodes P de la courbe périodique (7) étant un nombre entier qui vérifie les conditions suivantes:
(a) N*(W/sinA)=2ΠR,
(b) N*P=2ΠR*T, où T est un nombre entier,
(c) N*T est le plus petit commun multiple à N et T,
et le rapport T/N entre le nombre entier T de circonférences 2ΠR de la surface cylindrique de pose (6) et le nombre entier N de périodes P de la courbe périodique (7), nécessaires à la constitution du binappe de travail (21), étant au moins égal à 1.8 et au plus égal à 2.2.

## Patentansprüche

1. Flugzeugreifen (1), welcher umfasst:
- eine Arbeitsbewehrung (2) radial innerhalb eines Laufstreifens (3) und radial außerhalb einer Karkassenbewehrung (4),
- wobei die Arbeitsbewehrung (2) wenigstens eine Arbeits-Doppellage (21) umfasst, die aus zwei radial übereinanderliegenden Arbeitslagen (211, 212) besteht,
- wobei die Arbeits-Doppellage (21) von der zickzackförmigen Wicklung eines Bändchens (5) der Breite W in Umfangsrichtung auf einer zylindrischen Auflagefläche (6) mit dem Radius R, die als Rotationsachse die Drehachse (YY') des Reifens aufweist, entlang einer periodischen Kurve (7) gebildet wird,
- wobei die periodische Kurve (7) eine Periode P aufweist und einen Winkel A mit der Umfangsrichtung (XX') des Reifens in der Äquatorialebene (XZ) des Reifens bildet,
- wobei die zickzackförmige Wicklung des Bändchens (5) N Perioden P der periodischen Kurve (7) auf einer Anzahl T von Umfängen 2πR der zylindrischen Auflagefläche (6) umfasst,
- wobei die Anzahl N von Perioden P der periodischen Kurve (7) eine ganze Zahl ist, welche die folgenden Bedingungen erfüllt:
(a) N*(W/sinA) = 2πR,
(b) N*P = 2πR*T, wobei T eine ganze Zahl ist,
(c) N*T ist das kleinste gemeinsame Vielfache von N und T,
**dadurch gekennzeichnet, dass** das Verhältnis T/N zwischen der ganzen Zahl T von Umfängen 2πR der zylindrischen Auflagefläche (6) und der ganzen Zahl N von Perioden P der periodischen Kurve (7), die für die Bildung der Arbeits-Doppellage (21) erforderlich sind, wenigstens gleich 1,8 und höchstens gleich 2,2 ist.

2. Flugzeugreifen (1) nach Anspruch 1, wobei die Breite W des Bändchens (5) wenigstens gleich 2 mm ist, vorzugsweise wenigstens gleich 6 mm.

3. Flugzeugreifen (1) nach einem der Ansprüche 1 oder 2, wobei die Breite W des Bändchens (5) höchstens gleich 20 mm ist, vorzugsweise höchstens gleich 14 mm.

4. Flugzeugreifen (1) nach einem der Ansprüche 1 bis 3, wobei das Bändchen (5) aus Festigkeitsträgern besteht, die von einer Elastomermischung umhüllt sind, wobei das Bändchen (5) Festigkeitsträger umfasst, die aus einem textilen Material bestehen, vorzugsweise aus einem aliphatischen Polyamid.

5. Flugzeugreifen (1) nach einem der Ansprüche 1 bis 3, wobei das Bändchen (5) aus Festigkeitsträgern besteht, die von einer Elastomermischung umhüllt sind, wobei das Bändchen (5) Festigkeitsträger umfasst, die aus einem aromatischen Polyamid bestehen.

6. Flugzeugreifen (1) nach einem der Ansprüche 1 bis 3, wobei das Bändchen (5) aus Festigkeitsträgern besteht, die von einer Elastomermischung umhüllt sind, wobei das Bändchen (5) Festigkeitsträger umfasst, die aus einer Kombination eines aliphatischen Polyamids und eines aromatischen Polyamids bestehen.

7. Verfahren zur Herstellung eines Flugzeugreifens (1) nach einem der Ansprüche 1 bis 6, welches einen Schritt der Herstellung der Arbeits-Doppellage (21) umfasst, wobei die Arbeits-Doppellage (21) durch das zickzackförmige Wickeln eines Bändchens (5) der Breite W in Umfangsrichtung auf eine zylindrische Auflagefläche (6) mit dem Radius R, die als Rotationsachse die Drehachse (YY') des Reifens aufweist, entlang einer periodischen Kurve (7) erhalten wird, wobei die periodische Kurve (7) eine Periode P aufweist und einen Winkel A mit der Umfangsrichtung (XX') des Reifens in der Äquatorialebene (XZ) des Reifens bildet, wobei die zickzackförmige Wicklung des Bändchens (5) N Perioden P der periodischen Kurve (7) auf einer Anzahl T von Umfängen 2πR der zylindrischen Auflagefläche (6) umfasst, wobei die Anzahl N von Perioden P der periodischen Kurve (7) eine ganze Zahl ist, welche die folgenden Bedingungen erfüllt:
(a) N*(W/sinA) = 2πR,
(b) N*P = 2πR*T, wobei T eine ganze Zahl ist,
(c) N*T ist das kleinste gemeinsame Vielfache von N und T,
und wobei das Verhältnis T/N zwischen der ganzen Zahl T von Umfängen 2πR der zylindrischen Auflagefläche (6) und der ganzen Zahl N von Perioden P der periodischen Kurve (7), die für die Bildung der Arbeits-Doppellage (21) erforderlich sind, wenigstens gleich 1,8 und höchstens gleich 2,2 ist.

## Claims

1. Tyre (1) for an aeroplane, comprising:
- a working reinforcement (2) radially on the inside of a tread (3) and radially on the outside of a carcass reinforcement (4),
- the working reinforcement (2) comprising at least one working biply (21) consisting of two radially superposed working layers (211, 212),
- the working biply (21) consisting of the zigzag circumferential winding of a strip (5) of width W onto a cylindrical laying surface (6) of radius R, having as its axis of revolution the axis of rotation (YY') of the tyre, in a periodic curve (7),
- the periodic curve (7) having a period P and forming an angle A with the circumferential direction (XX') of the tyre in the equatorial plane (XZ) of the tyre,
- the zigzag circumferential winding of the strip (5) comprising N periods P of the periodic curve (7) over a number T of circumferences 2ΠR of the cylindrical laying surface (6),
- the number N of periods P of the periodic curve (7) being a whole number which satisfies the following conditions:
(a) N* (W/sinA) =2ΠR,
(b) N*P=2ΠR*T, where T is a whole number,
(c) N*T is the lowest common multiple of N and T,
**characterized in that** the ratio T/N between the whole number T of circumferences 2ΠR of the cylindrical laying surface (6) and the whole number N of periods P of the periodic curve (7) which are needed to make up the working biply (21), is at least equal to 1.8 and at most equal to 2.2.

2. Aeroplane tyre (1) according to Claim 1, **in which** the width W of the strip (5) is at least equal to 2 mm, preferably at least equal to 6 mm.

3. Aeroplane tyre (1) according to either one of Claims 1 and 2, **in which** the width W of the strip (5) is at most equal to 20 mm, preferably at most equal to 14 mm.

4. Aeroplane tyre (1) according to any one of Claims 1 to 3, the strip (5) being made up of reinforcers coated in an elastomeric compound, **in which** the strip (5) comprises reinforcers made of a textile material and preferably of an aliphatic polyamide.

5. Aeroplane tyre (1) according to any one of Claims 1 to 3, the strip (5) being made up of reinforcers coated in an elastomeric compound, **in which** the strip (5) comprises reinforcers made of an aromatic polyamide.

6. Aeroplane tyre (1) according to any one of Claims 1 to 3, the strip (5) being made up of reinforcers coated in an elastomeric compound, **in which** the strip (5) comprises reinforcers made up of a combination of an aliphatic polyamide and of an aromatic polyamide.

7. Method of manufacturing an aeroplane tyre (1) according to any one of Claims 1 to 6, comprising a step of manufacturing the working biply (21), **in which** the working biply (21) is obtained by the zigzag circumferential winding of a strip (5) of width W onto a cylindrical laying surface (6) of radius R, having as its axis of revolution the axis of rotation (YY') of the tyre, in a periodic curve (7), the periodic curve (7) having a period P and forming an angle A with the circumferential direction (XX') of the tyre in the equatorial plane (XZ) of the tyre, the zigzag circumferential winding of the strip (5) comprising N periods P of the periodic curve (7) over a number T of circumferences 2ΠR of the cylindrical laying surface (6), the number N of periods P of the periodic curve (7) being a whole number which satisfies the following conditions:
(a) N* (W/sinA) =2ΠR,
(b) N*P=2ΠR*T, where T is a whole number,
(c) N*T is the lowest common multiple of N and T, and the ratio T/N between the whole number T of circumferences 2ΠR of the cylindrical laying surface (6) and the whole number N of periods P of the periodic curve (7) which are needed to make up the working biply (21), being at least equal to 1.8 and at most equal to 2.2.
